(19) Europäisches Patentamt
European Patent Office
Office européen des brevets

(11) **EP 3 032 313 B1**

(12) **EUROPEAN PATENT SPECIFICATION**

(45) Date of publication and mention
of the grant of the patent:
**06.11.2019  Bulletin 2019/45**

(51) Int Cl.:
**G02B 27/01** (2006.01)    **G02B 25/00** (2006.01)
**G02B 13/22** (2006.01)

(21) Application number: **14835035.8**

(86) International application number:
**PCT/JP2014/004085**

(22) Date of filing: **05.08.2014**

(87) International publication number:
**WO 2015/019605 (12.02.2015 Gazette 2015/06)**

(54) **OCULAR LENS SYSTEM, AND IMAGE OBSERVATION DEVICE**

OKULARLINSENSYSTEM UND BILDBEOBACHTUNGSVORRICHTUNG

SYSTÈME DE LENTILLES OCULAIRES ET DISPOSITIF D'OBSERVATION D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.08.2013  JP 2013166470**

(43) Date of publication of application:
**15.06.2016  Bulletin 2016/24**

(73) Proprietors:
• **Ricoh Industrial Solutions Inc.**
**Yokomaha-shi, Kanagawa 222-8530 (JP)**
• **Sony Corporation**
**Tokyo 108-0075 (JP)**

(72) Inventors:
• **ISHIZUKA, Kenichi**
**Yokohama-shi, Kanagawa 2228530 (JP)**
• **UEMURA, Kamon**
**Minato-ku, Tokyo 108-0075 (JP)**

(74) Representative: **SSM Sandmair
Patentanwälte Rechtsanwalt
Partnerschaft mbB
Joseph-Wild-Straße 20
81829 München (DE)**

(56) References cited:
WO-A1-2010/087296    JP-A- 2002 182 127
JP-A- 2005 062 213    JP-A- 2011 043 599
JP-A- 2013 045 020

• HERBERT GROSS ET AL: "Handbook of Optical Systems", 1 January 2007 (2007-01-01), HANDBOOK OF OPTICAL SYSTEMS, ABERRATION THEORY AND CORRECTION OF OPTICAL SYSTEMS, WILEY-VCH, WEINHEIM, DE, PAGE(S) 252 - 260, XP002590150, ISBN: 978-3-527-40379-0 * page 252 - page 254 *
• Herbert Gross ET AL: "Handbook of Optical Systems, Vol.3: Aberration Theory and Correction of Optical Systems" In: "Handbook of optical systems, Aberration theory and correction of optical systems", 1 January 2007 (2007-01-01), Wiley-VCH, Weinheim, DE, XP055258161, ISBN: 978-3-527-40379-0 pages 377-379, * paragraphs 33.1.3, 33.1.4 *

**Description**

Technical Field

The present invention relates to an eyepiece system and an image observation apparatus.

Background Art

Conventionally, eyepiece systems that form a magnified virtual image of an observation object have been widely used in various optical instrument, such as magnifiers and microscopes. Furthermore, an image of an observation target site formed at an object-side end surface of an optical-fiber-bundle image transmission member of an endoscope is transmitted to an eyepiece-side end surface of the image transmission member, and the transmitted image, serving as an observation object, is magnified as a virtual image by an eyepiece system for observation.

Furthermore, an image that is two-dimensionally displayed on a compact image display device, such as a liquid-crystal display device or an EL display device, is magnified as a virtual image by an eyepiece system for observation.

The applicant has previously proposed an eyepiece system that is suitable for magnifying, as a virtual image, an image that is two-dimensionally displayed on a compact image display device for observation (Patent Literature 1).

Hereinbelow, an image magnified as a virtual image will also be referred to as a "magnified virtual image".

When using an eyepiece system, it is important that an observer can easily observe a magnified virtual image.

When an image that is two-dimensionally displayed on a compact image display device is magnified as a virtual image for observation, the image magnified as a virtual image will also be referred to as a "magnified image".

Typically, the magnification of the magnified image is very large. When the magnified image is a moving image, the line of sight of an observer moves over the magnified image so as to follow the movement of the image.

When the angle of view of the magnified image is increased to increase the image-forming magnification, the area in which the line of sight moves over the magnified image also increases.

When the line of sight of the observer moves over the magnified image, the eye of the observer becomes eccentric with respect to the optical axis of the eyepiece system.

The degree of eccentricity of the eye with respect to the optical axis of the eyepiece system will be referred to as "the amount of eccentricity".

More specifically, a situation where the center of the pupil of an observer's eye is on the optical axis of the eyepiece system and where the line of sight is aligned with the optical axis is assumed to be the reference position of the eye.

The distance between the center of the pupil and the optical axis of the eyepiece system when the observer moves the eye from the reference position, directing the line of sight to the left or to the right in the horizontal direction, is the amount of eccentricity.

When the amount of eccentricity increases, the quality of the magnified image to be observed (hereinbelow, an "observation image") is deteriorated. The range of the amount of eccentricity that does not practically deteriorate the quality of the observation image will be referred to as "the amount of allowable eccentricity".

If the amount of allowable eccentricity is small, the ease of observation is deteriorated.

Therefore, eyepiece systems having a large amount of allowable eccentricity is preferred.

Patent Literature 1 discloses a head-mounted image observation apparatus in which an eyepiece-system-and-image-display-device pair is used for each of the left and right eyes.

Such a head-mounted image observation apparatus will be abbreviated to an "HMD (head-mounted display)" below.

In this HMD, a difference between the pupillary distance (interpupillary distance) of an observer and the distance between the left and right eyepiece systems and vertical misalignment between the pupil and the eyepiece system also cause eccentricity.

The quality of the observation image is deteriorated also by this eccentricity. Typically, when an HMD is worn, the distance between the left and right eyepiece systems is adjusted according to the interpupillary distance of an observer so as to adjust fitting of the HMD to the observer's head.

At this time, when the adjustment of the distance between the left and right eyepiece systems or the adjustment of fitting is insufficient or when the adjusted state changes after the HMD is fitted, leading to above-described misalignment, the observation image is deteriorated.

Hence, if the amount of allowable eccentricity is small, precise adjustment is required when the HMD is fitted, making the adjustment needed when the HMD is fitted and the adjustment needed when the misalignment caused by the passage of time is corrected complicated.

Summary of Invention

Problems to be Solved by the Invention

The present invention addresses the problem of achieving an eyepiece system having a large amount of allowable eccentricity.

Means for Solving the Problems

An eyepiece system of the present invention is defined in appended independent claim 1.

Advantages

According to the present invention, it is possible to achieve a novel eyepiece system having an amount of allowable eccentricity of as large as $\pm 3$ mm which enables a magnified image to be easily observed.

By applying the eyepiece system of the present invention to an HMD image observation apparatus, the adjustment to be performed on the HMD when wearing the HMD or after wearing the HMD will be significantly simplified, improving the comfort when wearing the HMD and the resistance to misalignment after wearing the HMD.

Brief Description of Drawings

Fig. 1 is a diagram showing an embodiment of an eyepiece system.
Fig. 2 is a diagram showing longitudinal aberrations of a specific example of Embodiment in Fig. 1.
Fig. 3 is a diagram showing transverse aberrations of the specific example of Example in Fig. 1.
Fig. 4 is a diagram for explaining change in tangential field curvature depending on the amount of eccentricity S in Example 1.
Fig. 5 is a diagram for explaining change in tangential field curvature depending on the amount of eccentricity S in Comparative Example.
Fig. 6 is a diagram showing an embodiment of a head-mounted image observation apparatus using an eyepiece system, serving as a mode of use of the eyepiece system.
Fig. 7 show the image plane positions, the change in field curvature $\Delta$, and the parameters $\Delta/S$ when the amount of eccentricity S is 1, 2, 3, and 4 mm in Example 1.
Fig. 8 show the image plane positions, the change in field curvature $\Delta$, and the parameters $\Delta/S$ when the amount of eccentricity S is 1, 2, 3, and 4 mm in Comparative Example.

Description of Embodiments

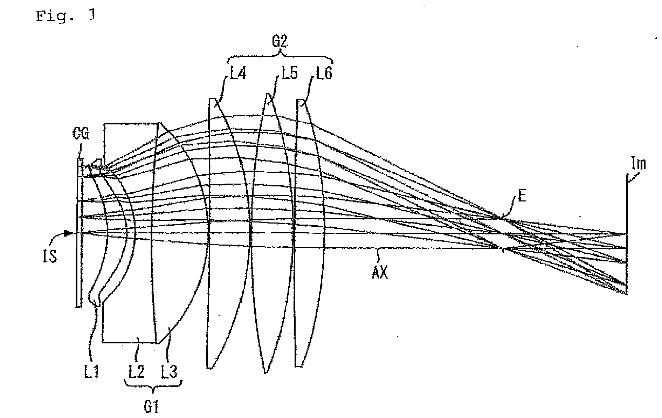

Hereinbelow, an embodiment will be described. Fig. 1 is a diagram showing an embodiment of an eyepiece system.

The eyepiece system shown in Fig. 1 is intended to be used to observe a two-dimensional image, serving as an observation object, that is displayed on an image display device, such as a liquid-crystal display device or an organic EL display device.

More specifically, a magnified image, obtained by magnifying the two-dimensional image as a virtual image is observed.

In Fig. 1, it is assumed that the left side of the drawing is an image display device side, i.e., an object side, and the right side is an eye side, i.e., an observation side.

In Fig. 1, reference sign IS denotes an image display surface of an image display device. The image is displayed as a two-dimensional image on the image display surface IS. Reference sign CG denotes a cover glass of the image display device.

Reference sign G1 denotes a first group, and reference sign G2 denotes a second group. Furthermore, reference sign E denotes a pupil of an eye. Furthermore, reference sign Im denotes an image forming surface. The lenses constituting the eyepiece system are numbered consecutively from the image display surface IS side to the observation side and will be referred to as lenses L1 to L6.

The eyepiece system of which embodiment is shown in Fig. 1 includes, as illustrated, six lenses, L1 to L6. The two lenses, L2 and L3, on the image display surface IS side constitute a first group G1 having a negative refracting power.

The lens L2 is a biconcave lens having a larger curvature on the image display surface IS side, and the lens L3 is a biconvex lens. The lenses L2 and L3 are cemented together, forming a cemented lens.

The lenses L4 to L6 form a second group G2 having a positive refracting power. The lenses L4 to L6 are all positive lenses.

More specifically, the lens L4 is a positive meniscus lens having a convex surface facing the observation side, and the lens L5 is a biconvex lens.

The lens L6 is a positive meniscus lens having a convex surface facing the observation side.

Although the lens L6 looks like a biconvex lens in Fig. 1, a portion thereof close to the axis has the shape of a positive meniscus lens having a convex surface facing the observation side.

The lens L1, which is additionally disposed to the image display surface IS side of the first group G1, is a positive meniscus lens having two aspherical surfaces, in which a concave surface faces the object side. The lens L1 serves as a field-curvature collecting lens.

The field-curvature collecting lens L1 is a so-called "field flattener lens" that reduces field curvature generated by the first group G1 and the second group G2 and makes the image forming surface flat.

Therefore, the power of the field-curvature collecting lens L1 itself is weak.

As shown in Fig. 1, an image of a two-dimensional image displayed on the image display surface IS is formed at the position of the image plane Im by the eyepiece system. More specifically, if there is not an observer's eye, an image of the two-dimensional image displayed on the image display surface IS is formed at the position of the image plane Im by the eyepiece system. When an observer observes the two-dimensional image, the image-forming light that is made to form an image by the eyepiece system enters the pupil E of the observer before forming an image and is refracted by the crystalline lens. More specifically, as illustrated, the pupil E of the observer's eye is positioned closer to the object side than the image plane Im, and hence, the magnified image observed by the observer is a magnified virtual image. In other words, the magnified image formed as a virtual image and the image on the retina of the observer's eye are in an image-forming relationship via the eyepiece system and the crystalline lens.

The field curvature described below is the curvature of the image plane Im.

As described above, the eyepiece system of this invention has a horizontal angle of view of 40 degrees or more.

The amount of change in tangential field curvature relative to the amount of eccentricity S mm between the optical axis of the eyepiece system (denoted by reference sign AX in Fig. 1) and the observer's eye is assumed to be $\Delta$ mm.

At this time, the maximum amount of eccentricity S that allow $\Delta/S$ to satisfy Condition:

$$(1) \quad -0.25 < \Delta/S < 0$$

at all image heights is 3 mm.

When a magnified image is observed, when an observer cannot focus on an intended image position on the magnified image when viewing this image position, the quality of the observation image is deteriorated, and a good image cannot be viewed.

When the observer views the peripheral portion of the magnified image, the amount of eccentricity S increases. The inventors have studied diligently the amount of eccentricity and the deterioration of the observation image.

As a result, the inventors have found that the deterioration of the observation image is caused by a change of the field curvature of the eyepiece system toward the minus side depending on the amount of eccentricity.

The parameter $\Delta/S$ in Condition (1) is the amount of change in field curvature standardized by the amount of eccentricity S.

In the change in field curvature depending on the amount of eccentricity S, the issue is the tangential field curvature.

Because sagittal field curvature is typically smaller than tangential field curvature, and hence, the amount of change associated with increased amount of eccentricity S is also small, it can be substantially ignored.

In the positive (+) area of the tangential field curvature, the observation image is a virtual image that can be observed in an in-focus state by the observer, and hence, a good observation image can be observed.

When the tangential field curvature changes to the minus direction into the negative (-) area, this area becomes a real image area, and the observer cannot achieve focus. This is the cause of the deterioration of the observation image. Hereinbelow, a change in tangential field curvature in the minus direction will also be referred to as a "decrease in the tangential field curvature".

Condition (1) shows the range of the proportion, $\Delta/S$, of change in tangential field curvature, $\Delta$, in the amount of eccentricity, S.

The upper limit of Condition (1) is 0. Even if the upper limit 0 is exceeded, the magnified image is in the virtual image area, and hence, the observer's eyes can focus on the image.

However, if the field curvature increases to the plus (+) side, the image plane of the observation image changes, distorting the image and making observation difficult. Therefore, the appropriate upper limit of Condition (1) is 0.

The horizontal angle of view with which the magnified virtual image can be easily observed is 40 degrees or more, and, for example, the appropriate range of the horizontal angle of view is 40 degrees to 45 degrees.

Typically, the parameter Δ/S of Condition (1) changes toward the minus side and decreases with increased horizontal angle of view.

In the eyepiece system having a horizontal angle of view of 40 degrees or more, when the parameter drops below the lower limit value, -0.25, of Condition (1), the amount of decrease in the field curvature per unit change in the amount of eccentricity S is excessive, and a real image area appears in the image area of the magnified image.

Thus, the amount of allowable eccentricity, with which the observation image can be observed in an in-focus state, decreases, deteriorating the ease of observation.

In the present invention, the maximum amount of eccentricity S that satisfies Condition (1) is 3 mm. That is, because the amount of allowable eccentricity is ±3 mm, even if the amount of eccentricity S is 3 mm the ease of observation is not deteriorated.

Whether or not the tangential image plane remains in the virtual image area in response to an amount of eccentricity of S mm depends on the object position in the eyepiece system for observing the virtual image.

With the eyepiece system of the present invention, under the condition where the horizontal angle of view is 40 degrees or more, including the condition determined by the object position as above, the amount of eccentricity S mm and the amount of change in tangential field curvature Δ mm satisfy Condition (1) at all the image heights, even when the amount of eccentricity is 3 mm.

It is of course preferable that the eyepiece system has high optical performance.

To achieve high optical performance, as well as lightweight and compact properties, the lens configuration, as shown in Fig. 1, satisfies the following Conditions (2) and (3).

$$(2) \quad -5 < F1/F < -1$$

$$(3) \quad 0.5 < F2/F < 3$$

In Conditions (2) and (3), "F (> 0)" is the focal distance of the overall system, "F1 (< 0)" is the focal distance of the first group, and "F2 (> 0)" is the focal distance of the second group.

Furthermore, it is desirable that the eyepiece system be telecentric on the object side and have an eye relief of 20 mm or more.

The eye relief is the distance between the observer's eye (the pupil E in Fig. 1) and the lens surface closest to the eye (i.e., the observation side surface of the lens L6).

As shown in the embodiment in Fig. 1, the first group G1 having a negative refracting power diverges the light from the observation object toward the eye.

By making the first group G1 have the divergence effect like this, even when a small observation object is observed, the angle of view can be increased.

Therefore, it is possible to form an image of the observation object as a magnified virtual image having a wide angle of view, making the observation of the magnified virtual image easy.

The smaller the absolute value of the parameter F1/F (< 0) in Condition (2) is, the greater the negative refracting power of the first group G1 is, and hence, the larger the effect of diverging the object light toward the eye side is.

However, if the upper limit value (= -1) of Condition (2) is exceeded, the divergence effect becomes excessive. Hence, the lens diameter of the second group G2 that focuses luminous flux from the observation object toward the eye needs to be increased.

As a result, the overall size of the eyepiece system tends to increase, and the cost also tends to increase.

Furthermore, it is difficult to ensure the telecentricity on the object side.

If the parameter drops below the lower limit value (=-5) of Condition (2), the divergence effect provided by the first group G1 becomes insufficient. Hence, to achieve a range of the horizontal angle of view of, for example, 40 degrees to 45 degrees, in which the observation can be easily performed, the second group G2 needs to have a large positive refracting power.

As a result, various aberrations tend to occur with increasing positive refracting power of the second group G2, making correction of such aberrations difficult.

Because the second group G2 has a positive refracting power, the second group G2 converges luminous flux, which is provided with divergence inclination by the first group G1, toward the eye. Because it is difficult to form the second group G2 from a single positive lens from the standpoint of the aberration correction, it is desirable that the second group be formed of two or three positive lenses and that these positive lenses share the aberration correction function.

The smaller the parameter F2/F (> 0) of Condition (3) is, the greater the second positive refracting power of the group G2 is.

If the parameter drops below the lower limit of Condition (3), the positive refracting power becomes excessive, making large aberration easily occur and making correction of the aberration difficult.

If the upper limit of Condition (3) is exceeded, the positive refracting power of the second group G2 tends to be insufficient, leading to a decrease in the distance (i.e., the eye relief) between the eyepiece system and the pupil E.

If the eye relief is small, the angle of shift of the pupil in the left-right direction increases with increasing horizontal angle of view, making the observation of the magnified image difficult.

Hence, it is difficult to achieve a horizontal angle of view of 40 degrees to 45 degrees.

Making the object side telecentric is preferable when an image that is two-dimensionally displayed on the image display device is an observation object, as shown in the embodiment.

The light from the image display device, such as a liquid-crystal display device or an organic EL display device, has directivity.

Therefore, by making the object side of the eyepiece system telecentric, the light from the image display device can be evenly and sufficiently captured.

Therefore, the problem of variations in the brightness and color of the observation image according to the angle of view can be avoided.

Furthermore, when the eyepiece system is used in a head-mounted image observation apparatus described below, when the eye relief is small, the observer's eye and the eyepiece system are close to each other.

Therefore, too small eye relief tends to give the observer a feeling of pressure and tends to make the observer tired, making, for example, long-time observation difficult.

To perform comfortable image observation, it is desirable that an eye relief of 20 mm or more be ensured.

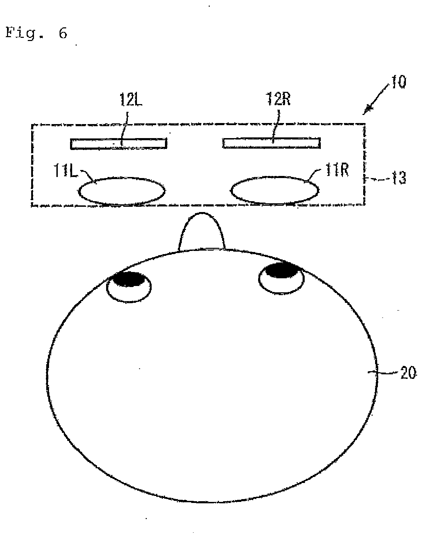

Fig. 6 shows an embodiment of a head-mounted image observation apparatus using the eyepiece system, serving as a mode of use of the eyepiece system. In Fig. 6, reference sign 10 denotes the image observation apparatus, and reference sign 20 denotes an observer's head.

The image observation apparatus 10 is configured such that important parts thereof, that is, a pair of eyepiece systems 11L and 11R and a pair of image display devices 12L and 12R are accommodated in the casing 13 so as to have a predetermined positional relationship. The casing 13 is attached to the observer's head 20 with an appropriate attaching means (not shown), such as a band or a frame. The eyepiece system 11L and the image display device 12L are for the left eye, and the eyepiece 11R and the image display device 12R are for the right eye. An eyepiece system according to any one of Claims 1 to 4, more specifically, an eyepiece system described in Example 1 below is used as the eyepiece systems 11L and 11R.

The image display devices 12L and 12R are, for example, liquid-crystal display devices or EL display devices.

The images displayed as two-dimensional images on the image display devices 12L and 12R serve as objects to be observed by the eyepiece systems 11L and 11R.

By switching the two-dimensional image for the right eye, displayed on the image display device 12L, and the two-dimensional image for the left eye, displayed on the image display device 12R, at a predetermined cycle, a three-dimensional image can be observed.

EXAMPLES

A specific example of the eyepiece system of which embodiment is shown in Fig. 1 will be presented below.

In Example 1 below, "surface number" is the lens surface number counted from the object side, "R" is the radius of curvature of the respective lens surfaces, and "D" is the distance between the adjacent lens surfaces.

"N" is the d-line refractive index of the lens material, and "v" is Abbe number.

The aspherical surface is expressed by the following known equation:

$$X = (H^2/R) / [1 + \{1 - k(H/r)^2\}^{1/2}]$$
$$+ A \cdot H^4 + B \cdot H^6 + C \cdot H^8 + D \cdot H^{10} + E \cdot H^{12} + \cdots,$$

where "X" is the displacement, in the optical axis direction, from the optical axis, at the position of the height H, when the apex of the surface is used as the reference.

Furthermore, "k" is the conic constant, A to E $\cdots$ are high-order aspheric constants, and "R" is the paraxial radius of curvature. Note that the unit of the amount having the length element is millimeter (mm).

Example 1

Lens data of Example 1 is shown in Table 1, and aspherical surface data is shown in Table 2.

[Table 1]

| Surface Number | R | D | N | v | Remarks |
|---|---|---|---|---|---|
| 1 | | 0.7 | 1.5 | 64 | Cover glass |
| 2 | | 3.6 | | | |
| 3 | -9.2 | 2.7 | 1.5 | 56 | Aspherical Surface |
| 4 | -7.0 | 1.2 | | | Aspherical surface |
| 5 | -12.2 | 2.3 | 1.9 | 18.0 | |
| 6 | 147.6 | 7.9 | 1.9 | 40.1 | |
| 7 | -19.9 | 0.2 | | | |
| 8 | -441.2 | 5.7 | 1.5 | 56 | Aspherical surface |
| 9 | -34.5 | 0.2 | | | Aspherical surface |
| 10 | 98.1 | 5.9 | 1.5 | 56 | Aspherical surface |
| 11 | -53.2 | 0.2 | | | Aspherical surface |
| 12 | -7844.9 | 4.2 | 1.5 | 56 | Aspherical surface |
| 13 | -60.1 | 25.0 | | | Aspherical surface |
| 14 | | | | | Pupil ($\phi$4) |

[Table 2]

| Aspherical Surface | K | A | B | C | D | E |
|---|---|---|---|---|---|---|
| 3 | -6.6 | 3.2E-04 | -1.4E-05 | 1.5E-07 | -2.9E-10 | 7.1E-13 |
| 4 | -0.9 | 5.4E-04 | -7.0E-06 | -7.0E-10 | 6.6E-10 | 5.2E-13 |
| 8 | -569.4 | 3.7E-07 | -2.6E-10 | -4.1E-12 | 7.7E-16 | 1.1E-16 |
| 9 | 0.5 | 2.9E-06 | -5.6E-11 | 8.0E-12 | 2.4E-14 | -2.8E-17 |
| 10 | 3.3 | 5.8E-07 | 7.8E-10 | -1.1E-12 | -7.0E-15 | 9.5E-18 |
| 11 | 0.2 | -2.7E-07 | -2.5E-11 | 1.3E-12 | 2.7E-15 | -2.2E-17 |
| 12 | -1117.1 | 8.8E-06 | -5.1E-08 | 3.0E-10 | -9.0E-13 | 8.5E-16 |
| 13 | 6.9 | -3.7E-06 | 6.1E-08 | -1.4E-10 | -2.8E-14 | 4.0E-16 |

In the data shown in Table 2, for example, "-3.7E-06" means "-3.7 $\times$ 10$^{-6}$".

In the eyepiece system in Example 1, the focal distance, F, of the overall system is 18.9 mm, the focal distance, F1, of the first group G1 is -63.2 mm, and the focal distance, F2, of the second group G2 is 27.4 mm. Therefore, the parameter F1/F of Condition (2) is -3.3, and the parameter F2/F of Condition (3) is 1.4.

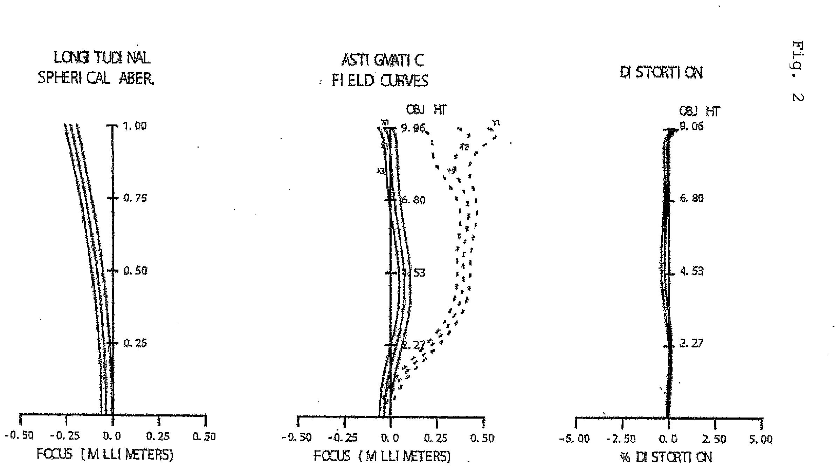

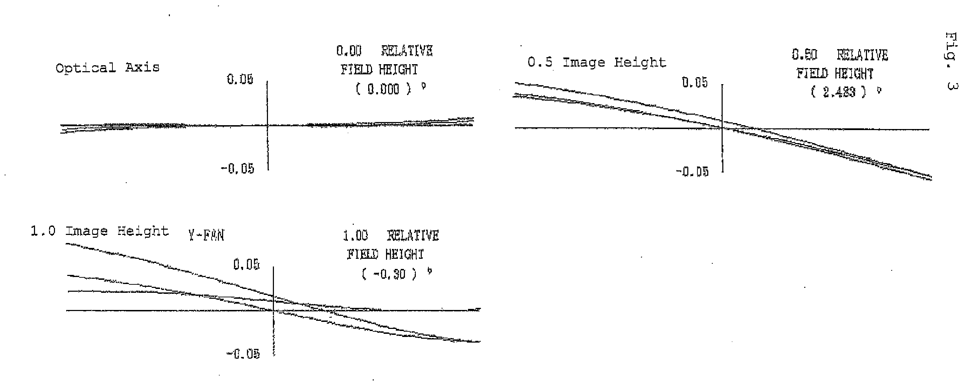

The diameter of the pupil E (pupil diameter) is 4 mm, the eye relief is 25 mm, the virtual-image observation distance is 20 m, and the horizontal angle of view is 45 degrees. Figs. 2 and 3 show aberration diagrams of the eyepiece system of Example 1. Fig. 2 shows longitudinal aberration, and Fig. 3 shows transverse aberrations.

As is clear from these aberration diagrams, with the eyepiece system of Example 1, the aberrations are effectively corrected, achieving high performance.

The eyepiece system of Example 1 may be used as the eyepiece systems 11L and 11R in the image observation apparatus in Fig. 6.

In such a case, the angle of convergence formed between the optical axes of the eyepiece diameters 11L and 11R is set such that the observation image for the left eye and the observation image for the right eye overlap at a position of an observation distance of 20 m.

The eyepiece system of Example 1 has a pupil diameter equal to 4 mm (i.e., the average normal pupil diameter) and puts more weight on reduction of deterioration of the observation image due to shifting or tilting of the pupil than on the on-axis resolution.

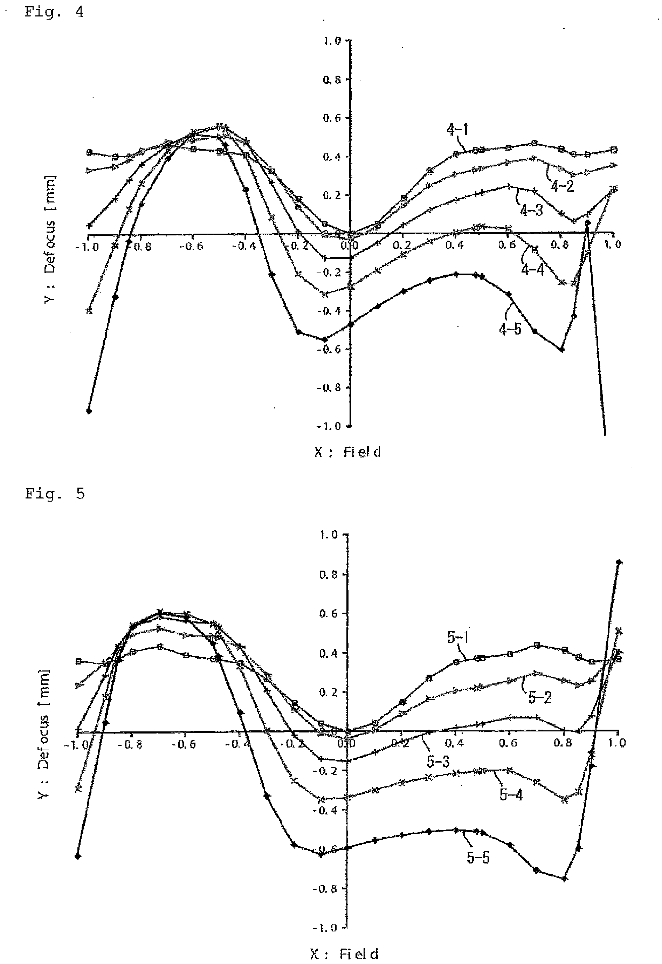

Fig. 4 is a diagram for explaining change in tangential field curvature depending on the amount of eccentricity S in Example 1.

In Fig. 4, the horizontal axis represents the image height, and the maximum image height is standardized to 1. The vertical axis represents the defocus, i.e., the amount of field curvature, expressed in the unit of millimeter (mm). Among the tangential field curvature represented by dashed lines in the diagram of field curvature and astigmatism in the longitudinal aberration diagrams in Fig. 2, a curved line 4-1 shows field curvature with respect to light having a wavelength of 538 nm (the middle curved line of the three field curvature lines).

The curved line 4-1 shows tangential field curvature with respect to the light of 538 nm, which is symmetrical with respect to the vertical axis. The amount of eccentricity S at this time is 0.

The curved lines 4-2, 4-3, 4-4, and 4-5 show tangential field curvature occurring when the amount of eccentricity S in the parameter ∆/S of Condition (1) is shifted in the plus (+) direction by 1 mm, 2 mm, 3 mm, and 4 mm, respectively.

As can be seen, the tangential field curvature represented by the curved lines 4-2 to 4-5 sequentially decreases toward the minus side (real image area side) of the vertical axis as the amount of eccentricity S increases.

With the curved line 4-1 obtained when S is 0 and the curved line 4-2 obtained when S is 1 mm, the field curvature is in the plus side, and the magnified image is in the virtual image area at almost all image heights, and hence, observation can be performed in a properly focused state.

Also with the curved line 4-3 obtained when S is 2 mm, the magnified image is in the virtual image area at an image height of 0.15 or more in a plus-side image height area, and hence, observation can be performed in a properly focused state.

Also with the curved line 4-4 obtained when S is 3 mm, the magnified image is in the virtual image area at an image height of 0.4 to 0.6 in the plus-side image height area, and hence, observation can be performed in a properly focused state.

With the curved line 4-5 obtained when S is 4 mm, the magnified image is in a positive real-image area in most part of the plus-side image height, and hence, proper focus cannot be achieved.

Accordingly, the eyepiece system in Example 1 has an amount of allowable eccentricity of ±3 mm.

Note that, when the amount of eccentricity S is on the plus side, the line of sight of the observer is directed to the right side of the magnified image, and therefore, field curvature occurring at the minus (-) side image heights is not a problem.

When the amount of eccentricity S is on the minus (-) side, curved lines obtained by inverting the curved lines 4-1 to 4-5 in Fig. 4 with respect to the vertical axis result.

A comparative example will be described below.

Comparative Example

An eyepiece system of Comparative Example is an eyepiece system disclosed as Example 3 in Patent Literature 1 and differs from that according to Embodiment in Fig. 1 in that it includes five lenses.

Lens data of Comparative Example is shown in Table 3, and aspherical surface data is shown in Table 4.

[Table 3]

| Surface Number | R | D | N | v | Remarks |
|---|---|---|---|---|---|
| 1 | | 0.2 | | | |
| 2 | | 0.7 | 1.5 | 64 | Cover glass |
| 3 | | 3.8 | | | |
| 4 | -9.4 | 2.9 | 1.5 | 56 | Aspherical surface |
| 5 | -7.3 | 0.6 | | | Aspherical surface |
| 6 | -13.1 | 3.0 | 1.9 | 19 | |
| 7 | 52.3 | 9.3 | 1.9 | 41 | |
| 8 | -23.9 | 0.4 | | | |
| 9 | 70.9 | 8.0 | 1.7 | 50 | |

(continued)

| Surface Number | R | D | N | v | Remarks |
|---|---|---|---|---|---|
| 10 | -45.7 | 0.4 | | | |
| 11 | 91.9 | 5.2 | 1.5 | 56 | Aspherical surface |
| 12 | -69.5 | 25.0 | | | Aspherical surface |
| 13 | | | | | Pupil ($\phi$4) |

[Table 4]

| Aspheric Constant | K | A | B | C | D | E |
|---|---|---|---|---|---|---|
| 4 | -5.0 | 1.6.E-04 | -1.3.E-05 | 1.6.E-07 | -3.2.E-10 | |
| 5 | -0.7 | 4.2.E-04 | -5.1.E-06 | -5.2.E-09 | 6.6.E-10 | |
| 11 | 7.6 | 8.4.E-06 | -4.5.E-08 | 2.9.E-10 | -8.4.E-13 | 1.1.E-15 |
| 12 | 3.6 | -4.5.E-06 | 6.4.E-08 | -1.2.E-10 | -9.6.E-15 | 3.9.E-16 |

In the eyepiece system of Comparative Example, the focal distance, F, of the overall system is 18.9 mm, the focal distance, F1, of the first group G1 is -55.0 mm, and the focal distance, F2, of the second group is 26.9 mm. Therefore, the parameter F1/F of Condition (2) is -2.9, and the parameter F2/F of Condition (3) is 1.4.

The diameter of the pupil E is 4 mm, the eye relief is 25 mm, the virtual-image observation distance is 20 m, and the horizontal angle of view is 45 degrees. The eyepiece system of Comparative Example also has a pupil diameter equal to 4 mm, which is the average normal pupil diameter, and puts more weight on reduction of deterioration of the observation image due to shifting or tilting of the pupil than on the on-axis resolution.

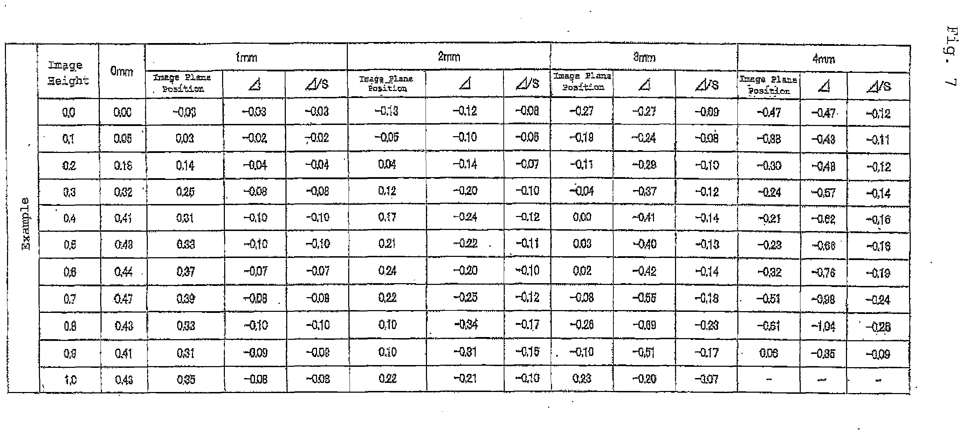

Furthermore, the eyepiece system of Comparative Example shows an aberration curve as shown in Fig. 7 of Patent Literature 1 and has high performance.

Fig. 5 is a diagram for explaining change in tangential field curvature depending on the amount of eccentricity S in Comparative Example, and Fig. 5 is illustrated in a similar manner to Fig. 4.

A curved line 5-1 shows tangential field curvature with respect to the light having a wavelength of 538 nm, which is symmetrical with respect to the vertical axis.

The curved lines 5-2, 5-3, 5-4, and 5-5 show tangential field curvature occurring when the amount of eccentricity S, serving as the parameter, is shifted in the plus (+) direction by 1 mm, 2 mm, 3 mm, and 4 mm.

As can be seen, the tangential field curvature represented by the curved lines 4-2 to 4-5 sequentially decreases toward the minus side (real image area side) of the vertical axis as the amount of eccentricity S increases.

With the curved line 5-1 obtained when S is 0 and the curved line 5-2 obtained when S is 1 mm, the field curvature is in the plus side, and the magnified image is in the virtual image area at almost all image heights, and hence, observation can be performed in a properly focused state.

Also with the curved line 5-3 obtained when S is 2 mm, the magnified image is in the virtual image area at an image height of 0.3 or more in the plus-side image height area, and hence, observation can be performed in a properly focused state.

With the curved line 5-4 obtained when S is 3 mm and the curved line 5-5 obtained when S is 4 mm, the magnified image is in the positive real-image area in most part of the plus-side image height, and hence, proper focus cannot be achieved.

Accordingly, the amount of allowable eccentricity of the eyepiece system of Comparative Example is ±2 mm.

That is, both of the eyepiece system of Example 1 and the eyepiece system of Comparative Example have high performance, are telecentric on the object side, and have an eye relief of 20 mm or more.

However, because the eyepiece system of Example 1 has an amount of allowable eccentricity ±1 mm larger than that of the eyepiece of Comparative Example, observation of the magnified image is easier with the eyepiece system of Example 1.

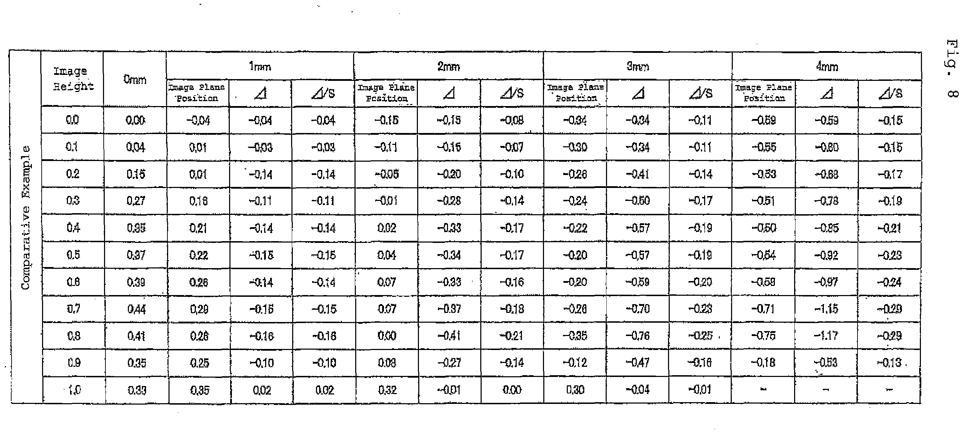

Figs. 7 and 8 show the image plane positions, the change in field curvature ∆, and the parameters ∆/S when the amount of eccentricity S is 1, 2, 3, and 4 mm in the eyepiece system of Example 1 and in the eyepiece system of Comparative Example.

Fig. 7 relates to Example 1, and Fig. 8 relates to Comparative Example. The image height, of which maximum value is standardized to 1, is shown from 0.0 to 1.0, with an increment of 0.1.

In Example 1, where the amount of eccentricity S is from 0 to 3, the parameter Δ/S is within the range of Condition (1) at all image heights.

In contrast, in Comparative Example, the parameter Δ/S is within the range of Condition (1) at all image heights where the amount of eccentricity S is 0 to 2.

Reference Signs List

IS     image display surface
CG     cover glass of image display device
L1     field-curvature collecting lens
G1     first group
G2     second group
E      pupil
Im     image forming surface
AX     optical axis

Citation List

Patent Literature

Patent Literature 1: Japanese Unexamined Patent Application Publication No. 2013-45020

**Claims**

1. An eyepiece system that is configured to form a magnified virtual image of an observation object, the eyepiece system having a horizontal angle of view of 40 degrees or more, the eyepiece system consisting of, in sequence from an object side to an observation side, a field-curvature collecting lens (L1), a first group (G1) having a negative refracting power, and a second group (G2) having a positive refracting power, the first group including a cemented lens, the cemented lens including a biconcave lens (L2) and a biconvex lens (L3), and the second group including two or three positive lenses, and the field-curvature collecting lens being a positive meniscus lens having two aspherical surfaces, such that a concave surface thereof is configured to face an image display device, wherein a proportion of an amount of change, in tangential field curvature, Δ and an amount of eccentricity, S mm, between the optical axis and an eye point satisfies (1):

$$(1) \; -0.25 < \Delta/S < 0,$$

and
wherein a positive focal distance, F, of the overall system, a negative focal distance, F1, of the first group, and a positive focal distance, F2, of the second group satisfy (2), (3):

$$(2) \quad -5 < F1/F < -1$$

$$(3) \quad 0.5 < F2/F < 3,$$

**characterized in that**
a maximum amount of eccentricity S, from an optical axis in a direction perpendicular to the optical axis, at a designed eye relief position, that makes (1) valid at all image heights is 3 mm.

2. The eyepiece system according to claim 1, wherein the eyepiece system is telecentric on the object side

3. The eyepiece system according to claim 1, wherein an eye relief, which is the distance between the eye-point and the lens surface closest to the eye-point, of 20 mm or more is ensured.

**4.** An image observation apparatus for observing a magnified virtual image of an image, serving as an observation object, that is two-dimensionally displayed on an image display device,
wherein the eyepiece system according to any one of claims 1 to 3 is used as an optical system for forming the virtual image of the image.

**5.** A head-mounted image observation apparatus comprising:

a pair of the image display devices, on which the two-dimensional images are displayed, according to claim 4; and
a pair of the eyepiece systems according to any one of claims 1 to 3.

**Patentansprüche**

**1.** Okularsystem, das konfiguriert ist, ein vergrößertes virtuelles Bild eines Betrachtungsobjekts zu erzeugen, wobei das Okularsystem einen horizontalen Blickwinkel von 40 Grad oder mehr aufweist, wobei das Okularsystem der Reihe nach von einer Objektseite zu einer Betrachtungsseite aus einer Feldwölbung-Sammellinse (L1), einer ersten Gruppe (G1) mit einer negativen Brechkraft und einer zweiten Gruppe (G2) mit einer positiven Brechkraft besteht, wobei die erste Gruppe eine zementierte Linse beinhaltet, wobei die zementierte Linse eine bikonkave Linse (L2) und eine bikonvexe Linse (L3) beinhaltet, und wobei die zweite Gruppe zwei oder drei positive Linsen beinhaltet, und wobei die Feldwölbung-Sammellinse eine positive Meniskuslinse mit zwei asphärischen Oberflächen ist, sodass eine konkave Oberfläche davon konfiguriert ist, einem Bildanzeigegerät zugewandt zu sein,
wobei ein Verhältnis eines Änderungsbetrags in der tangentialen Feldwölbung, $\Delta$, zu einem Exzentrizitätsbetrag, S, zwischen der optischen Achse und einem Augenpunkt (1) erfüllt:

$$(1)\ -0{,}25 < \Delta/S < 0$$

und
wobei eine positive Brennweite, F, des Gesamtsystems eine negative Brennweite, F1, der ersten Gruppe und eine positive Brennweite, F2, der zweiten Gruppe (2), (3) erfüllen:

$$(2)\ -5 < F1/F < -1$$

$$(3)\ 0{,}5 < F2/F < 3$$

**dadurch gekennzeichnet, dass**
ein maximaler Exzentrizitätsbetrag S von einer optischen Achse in einer zur optischen Achse senkrechten Richtung an einer konzipierten Augenabstandsposition, die (1) in allen Bildhöhen gültig macht, 3 mm ist.

**2.** Okularsystem nach Anspruch 1, wobei das Okularsystem auf der Objektseite telezentrisch ist.

**3.** Okularsystem nach Anspruch 1, wobei ein Augenabstand, der der Abstand zwischen dem Augenpunkt und der dem Augenpunkt am nächsten liegenden Linsenoberfläche ist, von 20 mm oder mehr gewährleistet ist.

**4.** Bildbetrachtungsvorrichtung zum Betrachten eines vergrößerten virtuellen Bilds eines Bilds, das als ein Betrachtungsobjekt dient und das zweidimensional auf einem Bildanzeigegerät angezeigt wird,
wobei das Okularsystem nach einem der Ansprüche 1 bis 3 als ein optisches System zum Erzeugen des virtuellen Bilds des Bilds verwendet wird.

**5.** Am Kopf befestigte Bildbetrachtungsvorrichtung, umfassend:

ein Paar der Bildanzeigegeräte, auf denen die zweidimensionalen Bilder angezeigt werden, nach Anspruch 4; und

ein Paar der Okularsysteme nach einem der Ansprüche 1 bis 3.

**Revendications**

1. Système d'oculaire qui est conçu pour former une image virtuelle agrandie d'un objet d'observation, le système d'oculaire présentant un angle horizontal de vue de 40 degrés ou plus, le système d'oculaire étant constitué, en séquence depuis un côté objet à un côté d'observation, une lentille collectrice de courbure de champ (L1), un premier groupe (G1) présentant une puissance de réfraction négative et un deuxième groupe (G2) présentant une puissance de réfraction positive, le premier groupe comprenant une lentille cimentée, la lentille cimentée comprenant une lentille biconcave (L2) et une lentille biconvexe (L3), et le deuxième groupe comprenant deux ou trois lentilles positives, et la lentille collectrice de courbure de champ étant une lentille à ménisque positif présentant deux surfaces asphériques, de manière qu'une surface concave de celle-ci est conçue pour faire face à un dispositif d'affichage d'image, une proportion d'une quantité de changement, dans une courbure de champ tangentiel, Δ, et une quantité d'excentricité, S, entre l'axe optique et un point oculaire vérifiant (1) :

$$(1) \qquad -0{,}25 < \Delta/S < 0,$$

et
une distance focale positive, F, du système général, une distance focale négative, F1, du premier groupe et une distance focale positive, F2, du deuxième groupe vérifiant (2), (3) :

$$(2) \qquad -5 < F1/F < -1$$

$$(3) \qquad 0{,}5 < F2/F < 3,$$

**caractérisé en ce que**
une quantité maximale d'excentricité S, depuis un axe optique dans une direction perpendiculaire à l'axe optique, dans une position prévue de relief oculaire, qui rend (1) valable à toutes les hauteurs d'image, est de 3 mm.

2. Système d'oculaire selon la revendication 1, le système d'oculaire étant télécentrique sur le côté objet.

3. Système d'oculaire selon la revendication 1, dans lequel un relief oculaire, qui constitue la distance entre le point oculaire et la surface de lentille la plus proche du point oculaire, de 20 mm ou plus est assuré.

4. Appareil d'observation d'image destiné à observer une image virtuelle agrandie d'une image, servant d'objet d'observation, qui est affichée en deux dimensions sur un dispositif d'affichage d'image,
le système oculaire selon l'une quelconque des revendications 1 à 3 étant utilisé en tant que système optique destiné à former l'image virtuelle de l'image.

5. Appareil d'observation d'image monté sur la tête comprenant :

une paire de dispositifs d'affichage d'image, sur lesquels les images bidimensionnelles sont affichées, selon la revendication 4 ; et
une paire des systèmes oculaires selon l'une quelconque des revendications 1 à 3.

Fig. 1

Fig. 2

Fig. 3

0.50 RELATIVE
FIELD HEIGHT
( 2.483 ) °

0.05

−0.05

0.5 Image Height

0.00 RELATIVE
FIELD HEIGHT
( 0.000 ) °

0.05

−0.05

Optical Axis

1.00 RELATIVE
FIELD HEIGHT
( −0.30 ) °

0.05

−0.05

1.0 Image Height   Y−FAN

Fig. 4

Fig. 5

Fig. 6

Fig. 7

EP 3 032 313 B1

| Image Height | 0mm | 1mm | | | 2mm | | | 3mm | | | 4mm | | |
|---|---|---|---|---|---|---|---|---|---|---|---|---|---|
| | | Image Plane Position | Δ | Δ/S | Image Plane Position | Δ | Δ/S | Image Plane Position | Δ | Δ/S | Image Plane Position | Δ | Δ/S |
| 0.0 | 0.00 | -0.03 | -0.03 | -0.03 | -0.13 | -0.12 | -0.06 | -0.27 | -0.27 | -0.09 | -0.47 | -0.47 | -0.12 |
| 0.1 | 0.05 | 0.03 | -0.02 | -0.02 | -0.05 | -0.10 | -0.05 | -0.19 | -0.24 | -0.08 | -0.38 | -0.43 | -0.11 |
| 0.2 | 0.18 | 0.14 | -0.04 | -0.04 | 0.04 | -0.14 | -0.07 | -0.11 | -0.29 | -0.10 | -0.30 | -0.48 | -0.12 |
| 0.3 | 0.32 | 0.25 | -0.08 | -0.08 | 0.12 | -0.20 | -0.10 | -0.04 | -0.37 | -0.12 | -0.24 | -0.57 | -0.14 |
| 0.4 | 0.41 | 0.31 | -0.10 | -0.10 | 0.17 | -0.24 | -0.12 | 0.00 | -0.41 | -0.14 | -0.21 | -0.62 | -0.16 |
| 0.5 | 0.48 | 0.33 | -0.10 | -0.10 | 0.21 | -0.22 | -0.11 | 0.03 | -0.40 | -0.13 | -0.23 | -0.66 | -0.16 |
| 0.6 | 0.44 | 0.37 | -0.07 | -0.07 | 0.24 | -0.20 | -0.10 | 0.02 | -0.42 | -0.14 | -0.32 | -0.76 | -0.19 |
| 0.7 | 0.47 | 0.39 | -0.08 | -0.08 | 0.22 | -0.25 | -0.12 | -0.08 | -0.55 | -0.18 | -0.51 | -0.98 | -0.24 |
| 0.8 | 0.43 | 0.33 | -0.10 | -0.10 | 0.10 | -0.34 | -0.17 | -0.26 | -0.69 | -0.23 | -0.61 | -1.04 | -0.26 |
| 0.9 | 0.41 | 0.31 | -0.09 | -0.08 | 0.10 | -0.31 | -0.15 | -0.10 | -0.51 | -0.17 | 0.06 | -0.35 | -0.09 |
| 1.0 | 0.43 | 0.35 | -0.08 | -0.08 | 0.22 | -0.21 | -0.10 | 0.23 | -0.20 | -0.07 | -- | -- | -- |

Example

Fig. 8

Comparative Example

| Image Height | 0mm | 1mm | | | 2mm | | | 3mm | | | 4mm | | |
|---|---|---|---|---|---|---|---|---|---|---|---|---|---|
| | | Image Plane Position | Δ | Δ/S | Image Plane Position | Δ | Δ/S | Image Plane Position | Δ | Δ/S | Image Plane Position | Δ | Δ/S |
| 0.0 | 0.30 | -0.04 | -0.04 | -0.04 | -0.15 | -0.15 | -0.08 | -0.34 | -0.34 | -0.11 | -0.59 | -0.59 | -0.15 |
| 0.1 | 0.04 | 0.01 | -0.03 | -0.03 | -0.11 | -0.15 | -0.07 | -0.30 | -0.34 | -0.11 | -0.55 | -0.80 | -0.15 |
| 0.2 | 0.15 | 0.01 | -0.14 | -0.14 | -0.05 | -0.20 | -0.10 | -0.26 | -0.41 | -0.14 | -0.53 | -0.68 | -0.17 |
| 0.3 | 0.27 | 0.18 | -0.11 | -0.11 | -0.01 | -0.28 | -0.14 | -0.24 | -0.50 | -0.17 | -0.51 | -0.78 | -0.19 |
| 0.4 | 0.35 | 0.21 | -0.14 | -0.14 | 0.02 | -0.33 | -0.17 | -0.22 | -0.57 | -0.19 | -0.50 | -0.85 | -0.21 |
| 0.5 | 0.37 | 0.22 | -0.15 | -0.15 | 0.04 | -0.34 | -0.17 | -0.20 | -0.57 | -0.19 | -0.54 | -0.92 | -0.23 |
| 0.6 | 0.39 | 0.26 | -0.14 | -0.14 | 0.07 | -0.33 | -0.16 | -0.20 | -0.59 | -0.20 | -0.58 | -0.97 | -0.24 |
| 0.7 | 0.44 | 0.29 | -0.16 | -0.16 | 0.07 | -0.37 | -0.18 | -0.28 | -0.70 | -0.23 | -0.71 | -1.15 | -0.29 |
| 0.8 | 0.41 | 0.28 | -0.18 | -0.18 | 0.30 | -0.41 | -0.21 | -0.35 | -0.76 | -0.25 | -0.75 | -1.17 | -0.29 |
| 0.9 | 0.35 | 0.25 | -0.10 | -0.10 | 0.08 | -0.27 | -0.14 | -0.12 | -0.47 | -0.16 | -0.18 | -0.53 | -0.13 |
| 1.0 | 0.33 | 0.35 | 0.02 | 0.02 | 0.32 | -0.01 | 0.00 | 0.30 | -0.04 | -0.01 | - | - | - |

19

## REFERENCES CITED IN THE DESCRIPTION

**Patent documents cited in the description**

- JP 2013045020 A